# EUROPÄISCHE PATENTSCHRIFT

(11) **EP 1 095 550 B1**
(45) Veröffentlichungstag und Bekanntmachung des Hinweises auf die Patenterteilung: **02.10.2002**
(21) Anmeldenummer: 00123250.3
(22) Anmeldetag: 26.10.2000
(51) Int. Cl.: A01B 73/00, A01D 34/66

(54) **Landwirtschaftliche Maschine**
Agricultural machine
Machine agricole

(30) Priorität: 29.10.1999 DE 29919024 U
(43) Veröffentlichungstag der Anmeldung: 02.05.2001
(73) Patentinhaber: Fella-Werke GmbH & Co. KG, 90537 Feucht bei Nürnberg (DE)
(72) Erfinder: Kohl, Bernhard, 90537 Feucht (DE); Pürrer, Josef, 90537 Feucht (DE)
(74) Vertreter: Grünecker, Kinkeldey, Stockmair & Schwanhäusser Anwaltssozietät

(56) Entgegenhaltungen:
- EP-A- 0 486 413
- US-A- 3 545 184
- US-A- 4 435 948
- US-A- 4 552 375
- US-A- 4 768 334

## Beschreibung

Die Erfindung betrifft eine landwirtschaftliche Maschine gemäß dem Oberbegriff des Anspruchs 1.

Wegen ihrer kostengünstigen Bauweise und einfachen Handhabung sind Mähwerke für den Heck-Dreipunktanbau in der Praxis weit verbreitet. Zur Steigerung der Flächenleistung ist die Nachfrage nach Mähwerken mit größerer Arbeitsbreite gestiegen. Die maximal mögliche Arbeitsbreite der seitlich ausladenden Heckenanbaumähwerke, insbesondere wenn sie mit Aufbereitern ausgerüstet sind, ist jedoch wegen der einseitigen Gewichtsbelastung des Schleppers begrenzt.

Für den Straßentransport werden derartige Mähwerke in eine Position hinter dem Schlepper geschwenkt. Der Schwerpunkt ist dabei weit von der Schlepperhinterachse entfernt, so dass die Vorderachse entlastet, und das Lenkverhalten des Schleppers unsicher wird. Zur Vermeidung dieses Nachteils sind auch bereits Mähwerke mit einem Stützrad bekannt, über welches das Maschinengewicht sowohl in Arbeits- als auch in Transportstellung abgestützt wird. In Arbeitsstellung muss dieses Stützrad hinter dem Mähwerk angeordnet sein, damit es nicht im Futter läuft. In Transportstellung dagegen sollte es möglichst mittig hinter der Maschine laufen. Außerdem muss eine derartige Stützradachse in Arbeitsstellung als selbstlenkendes Nachlaufrad ausgebildet sein, während es für die Transportstellung so fixiert sein soll, dass es die Führung des Mähwerkes übernehmen kann. Das Schwenkgelenk zwischen Anbaurahmen und Mähwerk wird in Transportstellung nicht fixiert, so dass das Mähwerk wie ein Einachsanhänger hinter dem Schlepper läuft und bei Kurvenfahrt nicht seitlich ausschert.

Für die notwendigen Stellvorgänge wie Ausheben des Mähwerkes, Positionsänderung des Stützrades, Arretierung der Stützradschwenkachse und Fixierung bzw. Freigabe der Schwenkachse zwischen Mähwerk und Anbauträger sind umfangreiche hydraulische Stellelemente, welche in einer bestimmten Reihenfolge betätigt werden müssen, erforderlich. Das weit seitlich ausladende Mähwerk ist durch Anfahren an Hindemisse gefährdet, weil der Schlepperfahrer den Seitenabstand der Mähwerkaußenkante zu einem Hindernis nur schwer abschätzen kann. Es ist daher eine sogenannte Anfahrsicherung notwendig, welche ein selbsttätiges Nachhintenschwenken des Mähwerkes beim Auftreffen auf ein Hindernis ermöglicht.

Bei einer landwirtschaftlichen Maschine der eingangs genannten Art gemäß EP 0 486 413 A umfasst die Arretiervorrichtung einen am Anbaurahmen mit seiner Kolbenstange festgelegten Kolben, auf dem ein eine Zahnstange tragender Hydraulikzylinder hinund herverfahrbar ist. Der Tragarm ist mit einem Zahnrad verbunden, das mit der Zahnstange kämmt. Die Wirkverbindung ist als hydromechanische Koppelung ausgebildet, die bei Verschwenken des Radträgers in die Transportstellung den Hydraulikzylinder in eine Schwimmstellung schaltet. Zur Anfahrsicherung ist ein in den Hydraulikkreis des Hydraulikzylinders eingesetztes Druckbegrenzungsventil vorgesehen. Der bauliche Aufwand ist hoch. Fehlfunktionen können nicht mit Sicherheit ausgeschlossen werden.

Bei einer aus US-A-4 768 334 bekannten landwirtschaftlichen Maschine ist eine hydraulische Wirkverbindung zwischen einem Zylinder zum Lösen eines die Arbeitsstellung definierenden Sperrbolzens und einem Zylinder zum Lenken von Stützrädern bekannt.

Weiterer Stand der Technik ist bekannt aus US-A-4 435 948, US-A-4 552 375 und US-A-3 545 184.

Der Erfindung liegt die Aufgabe zugrunde, eine landwirtschaftliche Maschine der eingangs genannten Art zu schaffen, die bedienfreundlich, betriebssicher und wirtschaftlich herzustellen ist.

Die gestellte Aufgabe wird mit den Merkmalen des Anspruchs 1 gelöst.

Wird der Radträger in die Transportstellung ausgeschwenkt, dann bewegt die Wirkverbindung das Gegeneingriffselement in die Auslösestellung und hält es in dieser. Weiteren Einfluss nimmt die Wirkverbindung auf die Arretiervorrichtung nicht. Es kann die Wirkverbindung baulich sehr einfach gestaltet werden und ist hohe Betriebssicherheit gegeben, weil das Gegeneingriffselement bei ausgeschwenktem Radträger zuverlässig seine Auslösestellung hält, unabhängig davon, welche Verhältnisse an der landwirtschaftlichen Maschine gerade vorliegen. Beispielsweise kann deshalb die Anfahrsicherung direkt in die Arretiervorrichtung eingegliedert sein und dennoch ihre Funktion unabhängig von der Wirkverbindung durchführen.

Zweckmäßig sind das Eingriffselement und das Gegeneingriffselement der Arretiervorrichtung ein Greifhaken und eine Sperrrolle, die nur durch die Feder in die gegenseitige Eingriffsstellung gebracht werden.

Eine einfache Ausführungsform der Wirkverbindung benutzt mechanische Zugmittel.

Bei einer alternativen Ausführungsform wird die Sperrrolle mittels eines Hydrozylinders in die Auslösestellung gebracht, wobei eine hydraulische Koppelung zwischen dem den Radträger hin- und herschwenkenden Hydraulikzylinder und dem Hydrozylinder derart vorgesehen ist, dass die bei ausgeschwenktem Radträger druckbeaufschlagte Seite des Hydraulikzylinders druckübertragend mit dem Hydrozylinder verbunden ist und dieser z.B. mittels des Hebels, die Sperrrolle in die Lösestellung bringt.

Wie erwähnt kann die Arretiervorrichtung als Anfahrsicherung ausgelegt sein, die bei Überlastung selbsttätig auslöst. Dies bedeutet, dass bei in der Arbeitsstellung befindlicher Maschine etwa bei Kollision mit einem Hindernis eine dadurch bedingte Überlastung in der Arretiervorrichtung einen selbsttätigen Auslösevorgang bewirkt, so dass die Maschine ohne Schaden aus der Arbeitsstellung wegschwenkt.

Die Funktion der Anfahrsicherung wird bei einer rein mechanischen Arretiervorrichtung zweckmäßig dadurch sichergestellt, dass der Fanghaken eine gegenüber der Kraftwirkungslinie der Sperrrolle mit einem kleinen Winkel geneigte Kontaktfläche für die Sperrrolle aufweist. Unter der Kraftwirkungslinie ist dabei die Richtung der Kraft zu verstehen, mit der die Sperrrolle um ihre Lagerung unter der Kraft der Feder gegen die Kontaktfläche gepresst wird. Durch den Winkel zwischen der Kraftwirkungslinie und der Kontaktfläche wird eine Querkomponente wirksam, die bei Überlastung die Sperrrolle gegen die Kraft der Feder entlang der Kontaktfläche bis in die Lösestellung bezüglich des Fanghakens verlagert, und zwar unabhängig von der Wirkungsverbindung zum Radträger, so dass bei einer Kollision die Anfahrsicherung ohne Beeinträchtigung durch die Wirkverbindung zuverlässig anspricht.

Anhand der Zeichnung werden Ausführungsformen des Erfindungsgegenstandes erläutert. Es zeigen:
- Fig. 1: eine Perspektivansicht einer landwirtschaftlichen Maschine, hier eines Anbaumähwerks, in einer seitlich zum Schlepper ausgeschwenkten Arbeitsstellung,
- Fig. 2: eine Perspektivansicht der Maschine in eingeschwenkter Transportstellung,
- Fig. 3: eine Perspektivansicht von Details der Maschine, in der Transportstellung, und
- Fig. 4: schematisch eine Detailvariante.

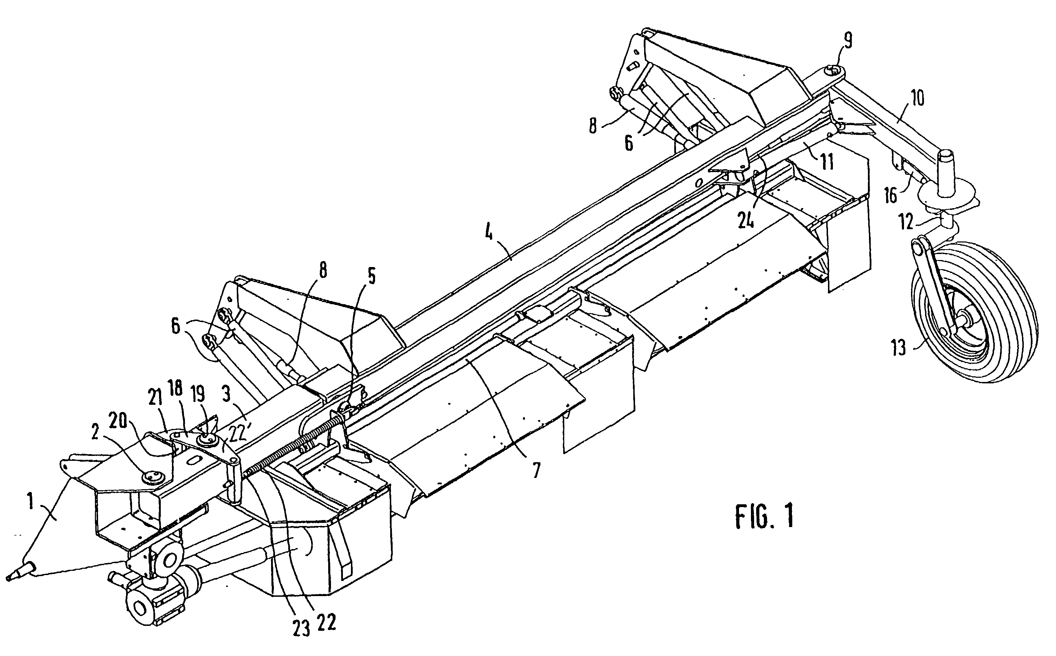

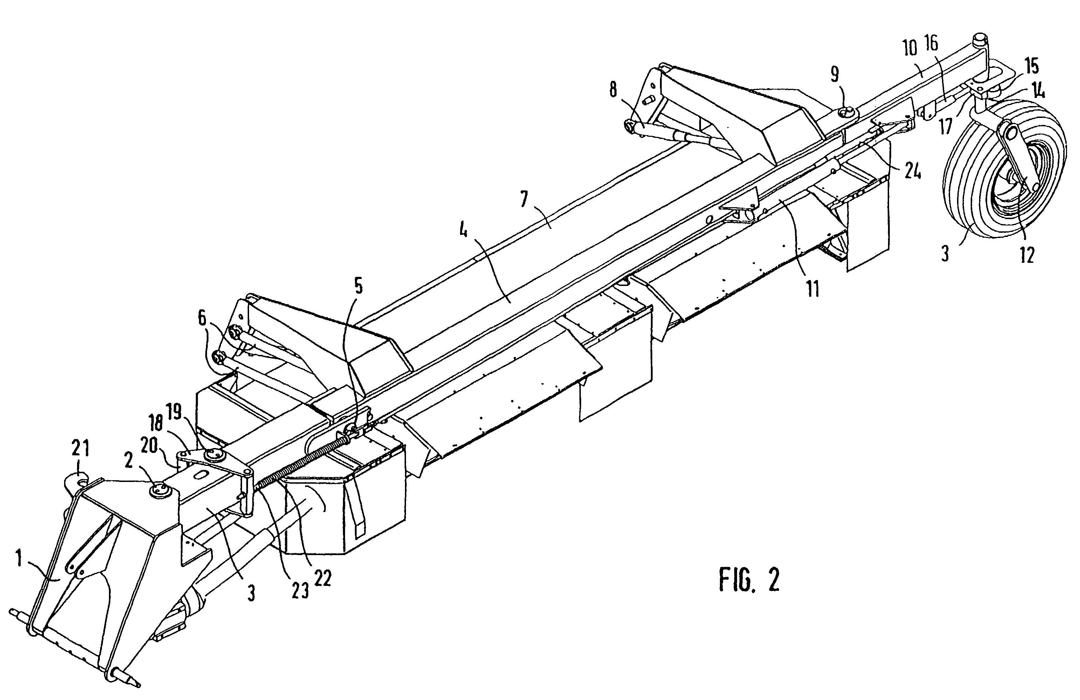

Eine in den Fig. 1 bis 4 gezeigte, landwirtschaftliche Maschine ist beispielsweise ein Anbaumähwerk. Die Maschine weist einen an den Dreipunkt-Anbau eines nicht gezeigten Schleppers anschließbaren Anbaurahmen 1 auf, mit welchem über eine vertikale Gelenkachse 2 ein Tragarm 3 verbunden ist. An dem Tragarm 3 ist ein Mähwerksträger 4 über eine horizontale Achse 5 angelenkt. Am Mähwerksträger 4 ist als Arbeitseinheit 7 eine Mäheinheit an Lenkern 6 höhenbeweglich geführt. Hydrozylinder 8 dienen dazu, die Arbeitseinheit für ausreichende Bodenfreiheit beispielsweise am Feldende und zum Straßentransport auszuheben. Am Mähwerksträger 4 ist an einer vertikalen Schwenkachse 9 ein Radträger 10 angelenkt. Ein doppeltwirkender, am Mähwerksträger 4 abgestützter Hydraulikzylinder 11 greift am Radträger 10 an, um diesen aus einer Arbeitsposition (in Fig. 1) in eine Transportposition (Fig. 2) und umgekehrt zu verstellen. In der Arbeitsposition steht der Radträger gegen die Arbeitsfahrtrichtung nach hinten, so dass er nicht im stehenden Gut läuft. In der Transportposition steht der Radträger 10 in etwa in Verlängerung des Mähwerksträgers 4.

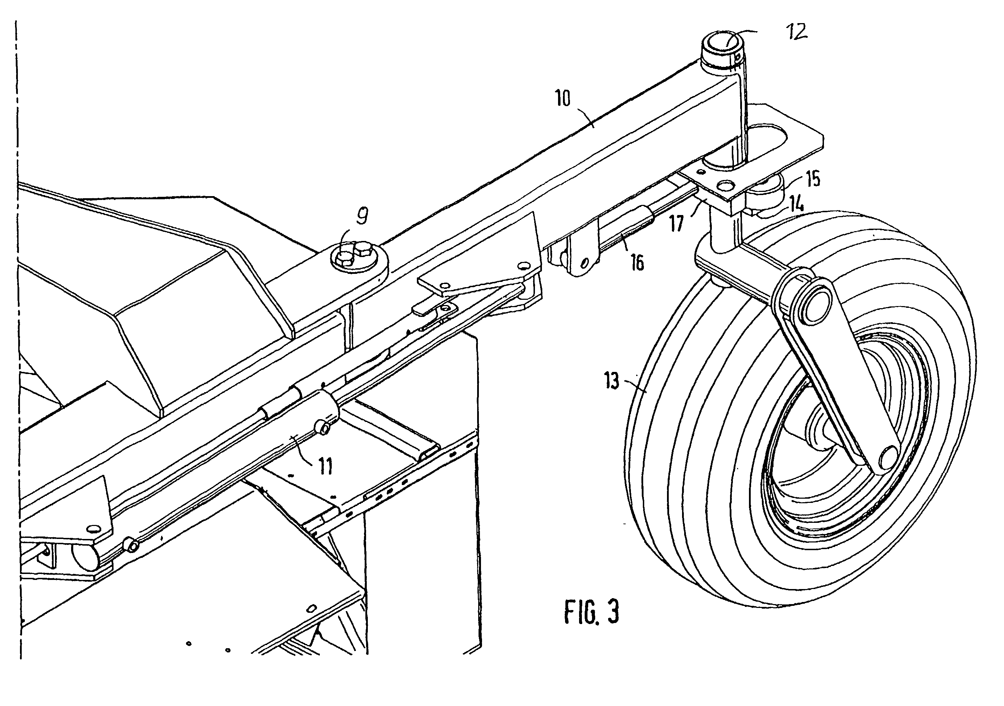

Am äußeren Ende des Radträgers 10 ist eine drehbare Stützradachse 12 gelagert, an der ein Stützrad 13 vorgesehen ist. Mit der Stützradachse 12 ist ein Doppelhebel 14 mit zwei um 180° zueinander versetzten Rollen 15 fest verbunden. Am Radträger 10 ist ein Hydrozylinder 16 abgestützt, mit dem eine im Bereich der Stützradachse 9 linear geführte Anpressplatte 17 gegen die Rollen 15 an der frei drehbaren Stützradachse 12 andrückbar ist, um die Stützradachse in eine für Transportfahrt geeignete Richtung einzustellen und zu fixieren (Fig. 3).

Der Tragarm 3 ist in der Arbeitsstellung der Maschine über eine Arretiervorrichtung 18 am Anbaurahmen 1 und um die Gelenkachse 2 fixiert. Die Arretiervorrichtung 18 weist am Tragarm einen Hebel 22' (beispielsweise einen rahmenartig gestalteten Hebel) auf, der um eine vertikale Achse 19 schwenkbar ist und eine Arretierungs-Rolle 20 enthält, die zweckmäßigerweise drehbar ist. Am Anbaurahmen 1 ist ein auf die Rolle 20 ausgerichteter Fanghaken 21 mit einer nicht näher hervorgehobenen Kontaktfläche für die Rolle 20 vorgesehen. Die Kontaktfläche des Fanghakens 21 ist mit einem kleinen Winkel relativ zur Kraftwirkungslinie der Rolle 20 um die Achse 19 geneigt. Die Rolle 20, bzw. der die Rolle 20 tragende Hebel 22', wird durch eine Druckfeder 22 um die Achse 19 beaufschlagt, und zwar in Richtung zu einer Eingriffsstellung, die beim Eingreifen der Rolle 20 in den Fanghaken 21 einer Einraststellung entspricht. Die unter dem kleinen Winkel geneigte Kontaktfläche des Fanghakens 21 bildet eine integrierte Anfahrsicherung der Maschine, weil die Arretiervorrichtung 18 gegen die Kraft der Druckfeder 22 selbsttätig auslöst, wenn die Arbeitseinheit 7 bzw. die Maschine in der Arbeitsstellung auf ein Hindernis trifft.

Zwischen dem Radträger 10 und der Arretiervorrichtung 18 ist eine Wirkverbindung vorgesehen, die in den Fig. 1 bis 3 Zugmittel in Form von beispielsweise Zugstangen 23 und 24 umfasst. Alternativ könnte auch ein Zugseil oder eine Kette oder dgl. vorgesehen sein. Diese Wirkverbindung stellt sicher, dass beim Ausschwenken des Radträgers 10 in die Transportposition (Fig. 2) die Arretiervorrichtung 18 bzw. die Rolle 20 gegen die Kraft der Druckfeder 22 um die Achse 19 schwenkt, wodurch die Arretierungsrolle 20 in ihre Außereingriffsstellung kommt. Sollte sich die Maschine gerade in der Arbeitsstellung befinden, gelangt die Rolle 20 durch die Wirkverbindung außer Eingriff mit dem Greifhaken 21, so dass die Maschine zur Schwenkbewegung mit ihrer Arbeitseinheit um die Gelenkachse 2 freigegeben wird.

In eine nicht gezeigte Verbindungsleitung zwischen den Hydrozylindern 8 zum Ausheben der Arbeitseinheit 7 und dem Hydrozylinder 16 zum Fixieren der Stützradachse 12 kann ein nicht gezeigtes Steuerventil eingesetzt sein, das bei in die Transportposition ausgeschwenktem Radträger 10 einen Ölstrom in beiden Richtungen erlaubt, so dass der Hydrozylinder 16 mit dem Beaufschlagungsdruck der Hydrozylinder 8 die Stützradachse einstellt und fixiert. Bei in die Arbeitsposition geschwenktem Radträger 10 sperrt das Steuerventil die Ölzufuhr von den Hydrozylindern 8 zum Hydrozylinder 16, während es den Abfluss des Öles aus dem Hydrozylinder 16 ermöglicht. Das Steuerventil stellt sicher, dass beim Absenken der Arbeitseinheit 7 die Fixierung der Stützradachse 12 immer aufgehoben wird, und die Fixierung der Stützradachse 12 nur beim Ausheben der Arbeitseinheit 7 in der Transportstellung der Maschine, erfolgt. In der Arbeitsstellung ist die Stützradachse 12 immer frei drehbar, so dass sich das Stützrad 13 bei Kurvenfahrt und auch beim Wenden und Rangieren mit ausgehobenem Mähwerk am Vorgewende selbstlenkend in die jeweilige Fahrtrichtung einstellen kann.

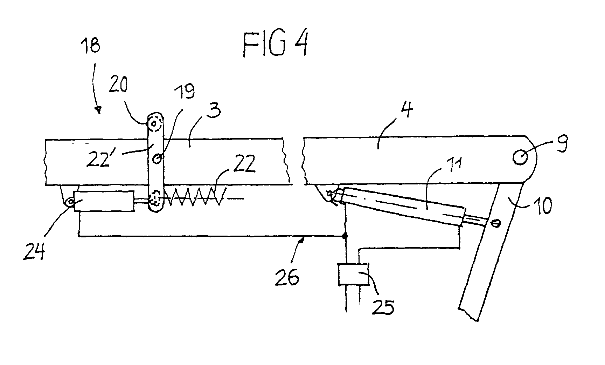

In Fig. 4 ist eine weitere, hier hydraulische Wirkverbindung zwischen dem Radträger 10 und der Arretiervorrichtung 8 gezeigt. Zum Verstellen der Rolle 20 bzw. des Hebels 22' in die Außereingriffsstellung ist ein am Tragarm 3 abgestützter Hydrozylinder 24 vorgesehen, der beispielsweise am Hebel 22' gegenüberliegend zur Angriffsstelle der Feder 22 angreift. Der am Mähwerksträger 4 abgestützte, doppelt wirkende Hydraulikzylinder 11 zum Verschwenken des Radträgers 10 um dessen Schwenkachse 9 wird über eine schematisch angedeutete Steuerventileinrichtung 25 betätigt. Zwischen der für das Ausschwenken des Radträgers 10 verantwortlichen Kammer des Hydraulikzylinders 11 und dem Hydrozylinder 20 ist eine hydraulische Koppelung 26 vorgesehen, um die Rolle 20 gegen die Kraft der Feder 22 in ihre Außereingriffsstellung zu drücken, sobald der Radträger 10 ausgeschwenkt wird.

Die Umstellung der Maschine aus der Arbeitsstellung in die Transportstellung wird bei abgesenkter Mäheinheit 7, eingeschwenktem Radträger 10 und freigesetzter Stützradachse 12 mit folgenden Schritten durchgeführt:
1. Ausschwenken des Radträgers 10 durch den Hydrozylinder 11 und Lösen der Arretiervorrichtung 18.
2. Ausheben der Mäheinheit 7 über die beiden Aushebezylinder 8. Dabei wird gleichzeitig der Hydrozylinder 16 druckbeaufschlagt, so dass über die Anpressplatte 17 und die Rollen 15 die Laufradachse 12 in eine für die Transportfahrt geeignete Stellung ausgerichtet und fixiert wird.
3. Beim Vorwärtsfahren schwenkt die Maschine hinter das Zugfahrzeug und folgt diesem wie ein Einachsanhänger.

Die Umstellung von der Transportstellung in die Arbeitsstellung der Maschine wird bei zunächst in Transportposition stehendem Radträger 10, ausgehobener Mäheinheit 7 und fixierter Laufradachse 12 wie folgt durchgeführt:
1. Das Zugfahrzeug fährt durch eine enge Rechtskurve vorwärts oder eine enge Linkskurve rückwärts, bis der Tragarm 2 mit der in der Lösestellung befindlichen Arretierungsrolle 20 am Fanghaken 21 anliegt.
2. Die Mäheinheit 7 wird über die Aushebezylinder 8 abgesenkt. Dadurch wird auch der Hydrozylinder 16 drucklos und wird die Fixierung der Stützradachse 12 freigegeben.
3. Der Radträger 10 wird vom Hydraulikzylinder 11 nach hinten in die Arbeitsposition geschwenkt. Über die Zugstangen 23 und 24 wird die Arretiervorrichtung 18 freigegeben, so dass die Arretierungsrolle 20 unter der Kraft der Feder 22 in den Fanghaken 21 des Anbaurahmens 1 einrasten kann.

## Patentansprüche

1. Landwirtschaftliche Maschine, insbesondere Mähwerk, für den Anbau an einen Schlepper, mit wenigstens einem Tragarm (3), der um eine vertikale Gelenkachse (2) eines Anbaurahmens (1) schwenkbar ist, und eine Arbeitseinheit (7) trägt, mit einer wahlweise betätigbaren Verriegelungsvorrichtung (18) zum Festlegen der Arbeitseinheit (7) in einer seitlich außerhalb der Schlepperspur angeordneten Arbeitsstellung, wobei die Arbeitseinheit in einer Auslösestellung der Verriegelungsvorrichtung (18) um die Gelenkachse (2) zum Transport auf öffentlichen Straßen nach rückwärts hinter den Schlepper schwenkbar ist, mit einem an einem an der dem Schlepper abgewandten Seite der Maschine in Arbeitsrichtung ein- und in eine Transportposition ausschwenkbaren Radträger (10) angeordneten Stützrad (13) zur Aufnahme eines TeilsdesMaschinengewichts, undmiteiner Wirkverbindung zwischen dem Radträger (10) und der Arretiervorrichtung (18), **dadurch gekennzeichnet, dass** die Arretiervorrichtung (18) ein Eingriffselement am Anbaurahmen (1) und ein Gegeneingriffselement am Tragarm (3) aufweist, dass das Gegeneingriffselement zwischen einer Außer-Eingriffstellung und einer Eingriffsstellung bewegbar gelagert und durch eine Feder (22) in die Eingriffsstellung bringbar ist, so, dass bei in seine Transportposition ausgeschwenktem Radträger (10) mittels der Wirkverbindung die Arretiervorrichtung gelöst und das Gegeneingriffselement gegen die Feder (22) in der Außereingriffstellung sind, und dass bei in Arbeitsrichtung eingeschwenktem Radträger (10) die Feder (22) mittels der Wirkverbindung zur Verstellung des Gegeneingriffselementes in die Eingriffsstellung freigegeben wird.

2. Landwirtschaftliche Maschine nach Anspruch 1, **dadurch gekennzeichnet, dass** die Arretiervorrichtung (18) als Gegeneingriffselement eine an einem am Tragarm (3) schwenkbaren, durch die Feder (22) beaufschlagbaren Hebel (22'), vorzugsweise drehbar, angeordnete Sperrrolle (20) und als Eingriffselement einen Fanghaken (21) am Anbaurahmen (1) aufweist, und dass die Sperrrolle (20) durch die Feder (22) in die Eingriffsstellung am Fanghaken (21) drückbar ist.

3. Landwirtschaftliche Maschine nach Anspruch 1, **dadurch gekennzeichnet, dass** die Wirkverbindung durch eine mechanische Koppelung über eine oder mehrere an Radträger (10) angelenkte Zugmittel (23, 24) wie Zugstangen, Zugseile, Ketten oder dgl., erfolgt, die, vorzugsweise, am Hebel (22') angreifen.

4. Landwirtschaftliche Maschine nach Anspruch 1, **dadurch gekennzeichnet, dass** der Radträger (10) mittels eines doppelt wirkenden Hydraulikzylinders (11) verschwenkbar ist, dass die Arretiervorrichtung (18) einen Hydrozylinder (24) aufweist, der am Hebel (22') angreift, und dass die Wirkverbindung eine hydraulische Koppelung (26) zwischen dem Hydrozylinder (24) und dem Hydraulikzylinder (11) umfasst.

5. Landwirtschaftliche Maschine nach wenigstens einem der Ansprüche 1 bis 4, **dadurch gekennzeichnet, dass** die Arretiervorrichtung (18) als Anfahrtssicherung so ausgelegt ist, dass sie bei Überlastung selbsttätig auslöst.

6. Landwirtschaftliche Maschine nach wenigstens einem der Ansprüche 2 bis 5, **dadurch gekennzeichnet, dass** der Fanghaken (21) wenigstens eine Kontaktfläche für die Sperrrolle (20) aufweist, die gegenüber der Kraftwirkungslinie der Sperrrolle mit einem kleinen Winkel derart geneigt ist, dass bei Überlastung die Sperrrolle (20) selbsttätig und unabhängig von der Wirkverbindung gegen die Kraft der Feder (22) entlang der Kontaktfläche bis in die Außereingriffsstellung am Fanghaken (21) gelangt.

## Claims

1. Agricultural machine, in particular a cutter bar, for mounting on a tractor, having at least one bracket (3), which is capable of swivelling about a vertical articulated axle (2) of a mounting frame (1), and carries an operating unit (7), having a selectively actuable locking apparatus (18) for fixing the operating unit (7) in an operating position disposed laterally outside of the tractor track, wherein the operating unit in a release position of the locking apparatus (18) is capable of swivelling back behind the tractor about the articulated axle (2) for transporting on public roads, having a support wheel (13) for taking up some of the machine weight, which support wheel is disposed on a wheel carrier (10) capable of swivelling at the end of the machine remote from the tractor inwards in operating direction and outwards into a transport position, and having a working connection between the wheel carrier (10) and the arresting apparatus (18), **characterized in that** the arresting apparatus (18) comprises a catch element on the mounting frame (1) and a counterpart catch element on the bracket (3), that the counterpart catch element is supported so as to be movable between a disengaged position and an engaged position and is movable by a spring (22) into the engaged position, such that, when the wheel carrier (10) is swivelled outwards into its transport position, by means of the working connection the arresting apparatus is released and the counterpart catch element is counter to the spring (22) in the disengaged position, and that, when the wheel carrier (10) is swivelled inwards in operating direction, by means of the working connection the spring (22) is released in order to move the counterpart catch element into the engaged position.

2. Agricultural machine according to claim 1, **characterized in that** the arresting apparatus (18) comprises, as counterpart catch element, a locking roller (20) disposed, preferably rotatably, on a lever (22'), which is capable of swivelling on the bracket (3) and loadable by the spring (22), and, as catch element, a catch hook (21) on the mounting frame (1), and that the locking roller (20) is pressable by the spring (22) into the engaged position on the catch hook (21).

3. Agricultural machine according to claim 1, **characterized in that** the working connection is effected by means of a mechanical coupling via one or more traction mechanisms such as connecting rods, traction ropes, chains or the like, which are coupled to wheel carrier (10) and which, preferably, act upon the lever (22').

4. Agricultural machine according to claim 1, **characterized in that** the wheel carrier (10) is swingable by means of a double-acting hydraulic cylinder (11), that the arresting apparatus (18) comprises a hydraulic cylinder (24), which acts upon the lever (22'), and that the working connection comprises a hydraulic coupling (26) between the hydraulic cylinder (24) and the hydraulic cylinder (11).

5. Agricultural machine according to at least one of claims 1 to 4, **characterized in that** the arresting apparatus (18) as an anti-approach device is designed in such a way that it automatically releases in the event of overload.

6. Agricultural machine according to at least one of claims 2 to 5, **characterized in that** the catch hook (21) has at least one contact surface for the locking roller (20), which contact surface is inclined at a small angle relative to the line of the action of force of the locking roller in such a way that in the event of overload the locking roller (20) moves automatically and independently of the working connection counter to the force of the spring (22) along the contact surface as far as into the disengaged position on the catch hook (21).

## Revendications

1. Machine agricole, moissonneuse en particulier, devant être raccordée à un tracteur, avec au moins un bras de support (3), susceptible de pivoter autour d'un axe d'articulation (2) vertical d'un cadre de raccordement (1) et portant une unité de travail (7), avec un dispositif de verrouillage (18), actionnable à volonté pour fixer l'unité de travail (7) en une ²position de travail disposée latéralement à l'extérieur de la piste de déplacement du tracteur, l'unité de travail étant susceptible de pivoter autour de l'axe d'articulation (2) en une position de déclenchement du dispositif de verrouillage (18) pour le transport sur des routes publiques, en étant orientée vers l'arrière derrière le tracteur, avec une roue d'appui (13), disposée sur un support de roue (10) susceptible d'être replié par pivotement, dans la direction de travail, et déployé par pivotement, en une position de transport, sur le côté de la machine opposé au tracteur, la roue d'appui (13) servant à supporter une partie du poids de la machine, et avec une liaison fonctionnelle entre le support de roue (10) et le dispositif de blocage (18), **caractérisée en ce que** le dispositif de blocage (18) présente un élément de prise sur le cadre de raccordement (1) et un élément de prise associé sur le bras de support (3), **en ce que** l'élément de prise associé est monté mobile, entre une position hors de prise et une position en prise, et est susceptible d'être placé à la position en prise à l'aide d'un ressort (22), de manière que, lorsque le support de roue (10) est déployé par pivotement à sa position de transport, le dispositif de blocage est désolidarisé à l'aide de la liaison fonctionnelle et l'élément de prise associé est en position hors de prise, à l'encontre de la force exercée par le ressort (22), et **en ce que** lorsque le support de roue (10) est replié par pivotement, à la position de travail, le ressort (22) est libéré à l'aide de la liaison fonctionnelle, dans le but de manoeuvrer l'élément d'emprise associé à la position de prise.

2. Machine agricole selon la revendication 1, **caractérisée en ce que** le dispositif de blocage (18) présente, à titre d'élément de prise associé, un galet de blocage (20), disposé, de préférence de façon à pouvoir tourner, sur un levier (22'), pouvant pivoter sur le bras de support (3), sollicité par le ressort (22), et présente, à titre d'élément de prise, un crochet de saisie (21) prévu sur le cadre de raccordement (1), et **en ce que** le galet de blocage (20) est susceptible d'être pressé par le ressort (22) à la position d'emprise sur le crochet de saisie (21).

3. Machine agricole selon la revendication 1, **caractérisée en ce que** la liaison fonctionnelle s'effectue au moyen d'un couplage mécanique par l'intermédiaire d'un ou plusieurs moyens de traction (23,24) articulés sur le support de roue (10), moyens de traction tels que des barres de traction, des câbles de traction, des chaînes ou analogues, qui agissent de préférence sur le levier (22').

4. Machine agricole selon la revendication 1, **caractérisée en ce que** le support de roue (10) est susceptible de pivoter au moyen d'un vérin hydraulique (11) à double action, **en ce que** le dispositif de blocage (18) présente un vérin hydraulique (24) agissant sur le levier (22') et **en ce que** la liaison fonctionnelle comprend un couplage hydraulique (26) entre le cylindre hydraulique (24) et le vérin hydraulique (11).

5. Machine agricole selon au moins l'une des revendications 1 à 4, **caractérisée en ce que** le dispositif de blocage (18) est conçu en tant que sécurité de démarrage pour ce qu'il se déclenche automatiquement en cas de surcharge.

6. Machine agricole selon au moins l'une des revendications 2 à 5, **caractérisée en ce que** le crochet de saisie (21) présente au moins une face de contact pour le galet de blocage (20), qui est inclinée d'un petit angle par rapport à la ligne de transmission de force du galet de blocage, de manière qu'en cas de surcharge, le galet de blocage (20) arrive automatiquement et indépendamment de la liaison fonctionnelle, à l'encontre de la force exercée par le ressort (22) le long de la face de contact jusqu'à la position hors de prise sur le crochet de saisie(21).
